Europäisches Patentamt

European Patent Office

Office européen des brevets

(11) Veröffentlichungsnummer: **0 252 339 B1**

(12) **EUROPÄISCHE PATENTSCHRIFT**

(45) Veröffentlichungstag der Patentschrift: **06.05.92**

(51) Int. Cl.⁵: **B01D 67/00**, C04B 35/52, C04B 38/00, D01F 9/22, B01D 46/54, F01N 3/02

(21) Anmeldenummer: **87108604.7**

(22) Anmeldetag: **15.06.87**

(54) **Verfahren zur Herstellung Poren aufweisender Kohlenstoffmembranen.**

(30) Priorität: **25.06.86 DE 3621257**

(43) Veröffentlichungstag der Anmeldung:
**13.01.88 Patentblatt 88/02**

(45) Bekanntmachung des Hinweises auf die
Patenterteilung:
**06.05.92 Patentblatt 92/19**

(84) Benannte Vertragsstaaten:
**BE DE FR GB IT NL**

(56) Entgegenhaltungen:
**CH-A- 515 185**
**DE-A- 2 614 391**
**FR-A- 2 069 071**

**CHEMICAL ABSTRACTS, Band 103, Nr. 10, 9. September 1985, Seite 61, Zusammenfassung Nr. 72505m, Columbus, Ohio, US; I. MLADENOV et al.: "Effect of chemical modification of Bulana polyacrylonitrile fiber on some properties of carbon fiber produced on this basis"**

(73) Patentinhaber: **Akzo N.V.**
**Postbus 186 Velperweg 76**
**NL-6800 LS Arnhem(NL)**

(72) Erfinder: **Schindler, Erich, Dr.**
**Elisenweg 4**
**W-8753 Obernburg(DE)**
Erfinder: **Maier, Franz**
**Burgunderstrasse 23**
**W-8753 Obernburg(DE)**

(74) Vertreter: **Fett, Günter et al**
**Akzo Patente GmbH Kasinostrasse 19 - 23**
**W-5600 Wuppertal 1(DE)**

PATENT ABSTRACTS OF JAPAN, Band 1, Nr. 102, 10. September 1977, Seite 2286 C 77; & JP-A-52 63 428 (MITSUBISHI RAYON K.K.) 25-05-1977

JOURNAL OF POLYMER SCIENCE: POLYMER CHEMISTRY EDITION, Band 21, 1983, Seiten 1223-1226, John Wiley & Sons, Inc., New York, US; I. MLADENOV et al.: "Polyacrylonitrile fibers treated by hydrazine hydrate as a basis for the production of carbon fibers"

PATENT ABSTRACTS OF JAPAN, Band 10, Nr. 63 (C-332)[2120], 13. März 1986; & JP-A-60 202 703 (TORAY K.K.) 14-10-1985

PATENT ABSTRACTS OF JAPAN, Band 10, Nr. 28 (C-326)[2085], 4. Februar 1986; & JP-A-60 179 102 (TORAY K.K.) 13-09-1985

**Beschreibung**

Die Erfindung betrifft ein Verfahren zur Herstellung von Poren aufweisenden Kohlenstoff-Membranen in Form von Kapillarmembranen, Schlauchmembranen oder Flachmembranen, die zu mehr als 75 Gewichtsprozent aus Kohlenstoff bestehen und eine Porosität von 10 bis 90% und einen maximalen Porendurchmesser im Bereich von 0,005 bis 3 $\mu$m aufweisen. Sie betrifft ferner Membranen, die nach diesem Verfahren herstellbar sind.

Membranen sind heute aus dem Bereich der Technik und Medizin nicht mehr wegzudenken. Vielfach lassen sich Trennprozesse unter Verwendung von Membranen günstiger durchführen als nach anderen Verfahren.

Membranen aus den verschiedensten Materialien und Verfahren zu ihrer Herstellung sind bekannt. Zu den Materialien, aus denen Membranen hergestellt wurden, zählen u.a. regenerierte Cellulose, Polyamide, Polyolefine. So hervorragend Membranen aus diesen Polymeren für bestimmte Einsatzgebiete, wie z.B. für Dialyse des Blutes Nierenkranker, auch sein mögen, weisen sie doch auf manchen Einsatzgebieten Nachteile auf, die ihre Verwendung einschränken oder sogar ganz verbieten. Als Nachteile von Membranen aus obengenannten Polymeren seien erwähnt: Unbeständigkeit gegenüber bestimmten organischen Lösungsmitteln, aggressiven Medien wie z.B. starken Säuren oder Basen sowie Unbeständigkeit bei hohen Temperaturen.

Wegen der Nachteile von Membranen aus organischen Polymeren wurden bereits Membranen aus anorganischen Materialien hergestellt und verwendet. So sind z.B. aus der DE-A-24 62 567 Siliziumdioxid-Membranen bekannt. Auch poröse Membranen aus Aluminiumoxid sind bekannt. Diese anorganischen Membranen weisen zwar gewisse Vorteile gegenüber Membranen aus organischen Polymeren auf, sind jedoch auch mit Nachteilen behaftet, wie z.B. Brüchigkeit, aufwendiges und kompliziertes Herstellungsverfahren, ungenügende elektrische Leitfähigkeit. Besonders die elektrische Leitfähigkeit wird in jüngster Zeit als erstrebenswerte Eigenschaft für manche Einsatzzwecke herausgestellt.

Als anorganisches Material für Membranen, welche die Nachteile anderer anorganischer Membranen nicht aufweisen, bietet sich Kohlenstoff an. Es wurden daher bereits Membranen aus Kohlenstoff hergestellt. So beschreiben J.E. Koresh und A. Sofer in "Separation Science and Technology" (1983) 18(8), Seiten 723 bis 734, Membranen aus Kohlenstoff, die durch Pyrolyse organischer Verbindungen hergestellt werden. Die Pyrolyse führt dabei bereits bei Anwendung relativ niedriger Temperaturen von beispielsweise 950 °C zu Kohlenstoffmaterial,
das keine Permeabilität für Gase, also kein
Porensystem besitzt, das einen Stofftransport von einer Oberfläche der Membran zur anderen ermöglicht. Vielmehr muß ein solches Porensystem erst durch eine Nachbehandlung geschaffen werden. Es hat sich herausgestellt, daß Kohlenstoff-Membranen mit größeren Poren nicht durch ein Verfahren hergestellt werden können, wie es in dieser Publikation angegeben ist, nämlich Voroxidation und Carbonisierung eines entsprechenden Ausgangsmaterials. Versucht man beispielsweise auf diese Art Kohlenstoff-Membranen mit größeren, von einer Oberfläche zur anderen durchgehenden Poren aus einem Polyacrylnitril herzustellen, das größere durchgehende Poren aufweist, so stellt man nach der Voroxidation und Carbonisierung fest, daß die Poren infolge Teerbildung und ungenügender Stabilität der Membran zum größten Teil verschlossen sind.

Das Problem ungenügender Stabilität poröser geformter Polymerkörper bei der thermischen Umwandlung in Kohlenstoffformkörper wird in der JP-A-52-63428 angesprochen. Diese Schrift betrifft die Herstellung als Adsorptionsmaterial dienender poröser Fäden mit Porengrößen bis zu einigen Hundert Angström. Zur Vermeidung verstopfter Poren wird eine Vorbehandlung mit Hydroxylamin als günstig angesehen. Daneben sind als weniger geeignete Möglichkeiten Hydrazine und Guanidine genannt. Die Lösungen von Hydroxylamin, die für diese Vorbehandlung beschrieben werden, können bis zu 25 % Hydroxylamin enthalten. Der Versuch, die Lehre dieser Schrift auf die Herstellung von Kohlenstoffmembranen mit durchgehenden Poren, vor allem solcher mit Porengrößen bis zu einigen $\mu$m, zu übertragen, brachte keine befriedigenden Ergebnisse, in Übereinstimmung mit den Angaben dieser Schrift, wonach erst durch eine Wasserdampfbehandlung hohe spezifische Oberflächen erhalten wurden.

In den US-Patentschriften US-A-3 977 967 und US-A-4 341 631 sind poröse röhrenförmige Formkörper aus Kohlenstoff beschrieben. Diese werden nach einem Verfahren hergestellt, bei dem ein Binder verkohlt wird. Nähere Angaben über das Herstellungsverfahren gehen daraus nicht hervor. Die Herstellung von Kohlenstoff-Membranen durch Verkohlung eines Binders, der in einem Trägermaterial enthalten ist, weist den Nachteil auf, daß es schwierig ist, Porengrößen und/oder deren Verteilung gezielt zu steuern. Daneben können, da das Membranmaterial morphologisch und chemisch uneinheitlich ist, z.B. durch nicht entfernte Abbauprodukte des Binders, die Einsatzmöglichkeiten der Membranen limitiert sein.

Aufgabe der vorliegenden Erfindung war es daher, ein Verfahren zur Herstellung von Kohlenstoff-Membranen aus einem einheitlichen Ausgangsmaterial zur Verfügung zu stellen, mit dem auch Membranen herstellbar sind, die eine hohe Porosität und große Poren aufweisen und daher auch zur Abtrennung größerer Teilchen mit hohen Transportraten geeignet sind, die aus einem einheitlichen Material bestehen und deren Porengrößen gezielt durch Verfahrensparameter beeinflußbar sind.

Die Aufgabe wurde gelöst durch ein Verfahren gemäß Oberbegriff von Anspruch 1, das dadurch gekennzeichnet ist, daß man

(a) die Membran in einer wäßrigen Hydrazinlösung, die mindestens 40 Gewichtsprozent Hydrazin enthält, vorbehandelt, wäscht und trocknet,

(b) eine Voroxidation der Membran in einem Temperaturbereich von 180 bis 350 °C und

(c) in einem inerten gasförmigen Medium eine Carbonisierung der Membran in einem Temperaturbereich von 600 bis 3000 °C durchführt.

Es wurde gefunden, daß sich die Poren des Ausgangsmaterials bei der Durchführung des erfindungsgemäßen Verfahrens nicht in unkontrollierbarer Weise verändern, sondern daß die Porenstruktur im wesentlichen erhalten bleibt und durch Einstellung der verschiedenen Verfahrensparameter gezielt beeinflußt werden kann. Weiter wurde gefunden, daß durch diese Maßnahmen Teerbildung und Verstopfung der Poren ganz oder nahezu vollständig verhindert werden kann. Es war überraschend, daß diese Nachteile bekannter Verfahren durch eine Vorbehandlung mit relativ stark konzentrierter Hydrazinlösung ausgeschaltet werden können.

Mit dem erfindungsgemäßen Verfahren lassen sich Membranen herstellen, die durchgehende, miteinander verbundene Poren aufweisen. Darunter ist zu verstehen, daß an beiden Oberflächen und im Innern dieser Membranen Poren vorliegen und daß diese miteinander in Verbindung stehen, so daß ein Stofftransport von einer Oberfläche der Membran durch das Porensystem hindurch zur anderen Oberfläche möglich ist. Auf diese Weise können Bestandteile eines Stoffgemischs, das an einer Membranoberfläche vorliegt, aus dem Gemisch abgetrennt und an der anderen Membranoberfläche zurückgewonnen werden. Es können zwar neben durchgehenden, miteinander verbundenen Poren zusätzlich noch isolierte Poren bzw. Hohlräume im Innern der Membran vorliegen, die mit der Oberfläche und den übrigen Poren nicht in Verbindung stehen. Diese tragen jedoch nichts zum Stofftransport bei.

Mit dem erfindungsgemäßen Verfahren lassen sich Membranen herstellen, die zu mehr als 75 Gew.-% aus Kohlenstoff bestehen. Dieser hohe Kohlenstoffgehalt wird nach der Carbonisierung bei 600 bis 3000 °C erhalten, wobei in Abhängigkeit von der gewählten Temperatur die Verweilzeiten unterschiedlich sein können.

Mit dem erfindungsgemäßen Verfahren lassen sich Membranen in Form von Kapillarmembranen, Schlauchmembranen oder Flachmembranen herstellen. Kapillarmembranen, die häufig auch als Hohlfaden- bzw. Hohlfasermembranen bezeichnet werden, sind für viele Anwendungszwecke besonders gut geeignet, da sie ein hohes Verhältnis von Oberfläche zu Volumen aufweisen. Entsprechend der gewünschten Ausführungsform geht man bei der Herstellung der Membranen nach dem erfindungsgemäßen Verfahren von einer Poren aufweisenden Membran in Form einer Kapillarmembran, Schlauchmembran oder Flachmembran aus einem Acrylnitrilpolymeren aus. Die Ausgangsmembran weist ebenfalls durchgehende Poren auf.

Mit dem erfindungsgemäßen Verfahren lassen sich Membranen einer Porosität von 10 bis 90 % herstellen. Vorzugsweise werden Membranen einer Porosität von 50 bis 80 % hergestellt, da höhere Porosität bei sonst gleichen Daten höhere Stofftransportraten ermöglicht, andererseits bei zu hohen Porositäten unter Umständen die mechanische Stabilität für manche Anwendungszwecke nicht mehr voll befriedigend sein kann. Ferner lassen sich mit dem erfindungsgemäßen Verfahren sowohl Membranen mit relativ kleinen Poren als auch mit relativ großen Poren herstellen, je nach Wahl eines kleinerporigen oder größerporigen Ausgangsmaterials. Es sind z.B. Kohlenstoffmembranen mit einem maximalen Porendurchmesser im Bereich von 0,005 bis 3 $\mu$m herstellbar. In einer bevorzugten Ausführungsform liegt der maximale Porendurchmesser im Bereich von 0,01 bis 0,05 $\mu$m. Solche Membranen sind speziell für den Ultrafiltrationsbereich gut geeignet.

In einer weiteren bevorzugten Ausführungsform werden mit dem erfindungsgemäßen Verfahren Membranen hergestellt, die Poren mit einem maximalen Durchmesser im Bereich von 0,1 bis 1 $\mu$m aufweisen. Diese Membranen sind vorteilhaft im Mikrofiltrationsbereich, d.h. zur Abtrennung größerer Teilchen, einsetzbar.

Die Porosität der Membranen stellt ein Maß für das durch die offenen, miteinander verbundenen Poren eingenommene Volumen dar. Sie ist definiert als der Quotient aus diesem Volumen und dem Gesamtvolumen der Membran. Die Bestimmung der Porosität kann dadurch erfolgen, daß man das spezifische Gewicht der Membran in Vergleich setzt zum spezifischen Gewicht eines nichtporösen Kohlenstofffadens,der unter gleichen Bedingungen wie die Membran, aber unter Verwendung eines nichtporösen Ausgangsmaterials hergestellt wurde. Das spezifische Gewicht der Membran wird hierbei mit Hilfe einer nichtbenetzenden Flüssigkeit bestimmt.

Der maximale Porendurchmesser der Membranen läßt sich beispielsweise nach der bekannten Blaspunktmethode ermitteln. Dies kann so geschehen, daß man an einer der beiden Membranoberflächen einen zusammenhängenden Film aus Isopropanol von Raumtemperatur und Normaldruck erzeugt, z.B. durch Einlegen einer Oberfläche einer Flachmembran in Isopropanol oder Eintauchen einer am unteren Ende verschlossenen Kapillarmembran in Isopropanol. Anschließend wird die andere Oberfläche der Membran mit gasförmigem Stickstoff beaufschlagt und der $N_2$-Druck erhöht, bis die erste Gasblase an der mit Isopropanol beaufschlagten Oberfläche austritt. Der Druck P, bei dem dies erfolgt, wird nach folgender Formel auf den maximalen Porendurchmesser ($d_{max}$) umgerechnet:

$$d_{max} = \frac{0,637}{P(bar) - Normaldruck(bar)}$$

Bestimmt wird mit dieser Methode der maximale Wert, den eine durchgehende Pore an ihrer engsten Stelle besitzt.

Die im vorliegenden Text genannten Porositäten und maximalen Porendurchmesser beziehen sich auf diese genannten Bestimmungsmethoden.

Das erfindungsgemäße Verfahren besteht darin, daß man zur Herstellung der Membranen von Poren aufweisenden Membranen aus organischem Material ausgeht und diese durch die erwähnten Schritte in Membranen umwandelt, die zu mehr als 75 Gewichtsprozent aus Kohlenstoff bestehen.

Es ist mit dem erfindungsgemäßen Verfahren möglich, Kohlenstoffmembranen ausgehend von Membranen aus einem Acrylnitrilpolymeren herzustellen, die durchgehende miteinander verbundene Poren und eine Porosität von 10 bis 90 % aufweisen. Ihr maximaler Porendurchmesser kann sehr breit variiert werden, z.B. im Bereich von 0,01 bis 3 $\mu$m. In bevorzugten Ausführungsformen des Verfahrens werden Membranen einer Porosität von 50 bis 80 % und eines maximalen Porendurchmessers im Bereich von 0,01 bis 1,5 $\mu$m hergestellt.

Als Ausgangsmaterial für die Herstellung der Membranen sind Membranen aus einem fadenbildenden Acrylnitrilpolymeren geeignet, das durch Carbonisierung bei einer Temperatur von mindestens 600 °C in einen Kohlenstofformkörper umgewandelt werden kann, welcher zu mehr als 75 Gewichtsprozent aus Kohlenstoff besteht. Geeignet sind somit Membranen aus solchen Acrylnitrilpolymeren, die zur Herstellung von Kohlenstoffäden oder -fasern verwendet werden können.

Die Literatur über Kohlenstoffäden nennt zahlreiche Beispiele solcher Polymerer. Hierzu wird beispielsweise auf das Buch "Carbon Fibers" von J.-B. Donnet und R.C. Bansal, "International Fiber Science and Technology Series", Vol. 3, Marcel Dekker, Inc. New York, 1984, verwiesen. Weitere Angaben hierzu finden sich in der DE-B-26 14 391.

Die Poren aufweisenden Ausgangsmembranen können nach allgemein bekannten Verfahren zur Herstellung von Membranen aus organischen Polymeren erhalten werden. Eine Möglichkeit, eine geeignete Poren aufweisende Membran aus Polyacrylnitril herzustellen, wird unten in Ausführungsbeispiel 1 genannt.

Weitere geeignete Verfahren zur Herstellung von geeigneten Membranen aus Acrylnitrilpolymeren sind in der DE-A-19 54 505 und in der US-A-3 615 024 beschrieben.

Mit dem erfindungsgemäßen Verfahren werden Membranen aus Acrylnitrilpolymeren in Kohlenstoffmembranen umgewandelt. Unter Acrylnitrilpolymeren werden hierbei Polymere verstanden, die vollständig oder zu mindestens 60, vorzugsweise 85 Gewichtsprozent, aus Acrylnitrileinheiten aufgebaut sind. Geeignete Acrylnitrilpolymere sind beispielsweise Polyacrylnitril oder Copolymere aus Acrylnitril und damit copolymerisierbaren Verbindungen mit einer oder mehreren olefinischen Doppelbindungen wie Styrol, Methacrylsäure und ihre Ester, Acrylsäure und ihre Ester, Vinyläther und -ester, Vinylsulfonsäure und Vinylchlorid.

Da Membranen aus Acrylnitrilpolymeren zur Herstellung der Kohlenstoff-Membranen verwendet werden, muß vor der Carbonisierung, d.h. der Umwandlung in die Kohlenstoff-Membranen, eine erste Hitzebehandlung stattfinden. Aus der Literatur über die Herstellung nichtporöser Kohlenstoffäden und -fasern ist bekannt, daß diese erste Hitzebehandlung, oft auch als Voroxidation bezeichnet, erforderlich ist, um die nachfolgende Carbonisierung bei ausreichender Formstabilität durchführen zu können. Die Membranen aus Acrylnitrilpolymeren werden durch diese erste Hitzebehandlung unschmelzbar gemacht.

Beim erfindungsgemäßen Verfahren erfolgt die erste Hitzebehandlung bzw. Voroxidation im Temperaturbereich von 180 bis 350 °C. Die nachfolgende Carbonisierung wird im Temperaturbereich von 600 bis 3000 °C durchgeführt. In bevorzugten Ausführungsformen erfolgt die erste Hitzebehandlung im Temperaturbereich von 200 bis 250 °C und die Carbonisierung im Temperaturbereich von 800 bis 1600 °C. Es hat sich gezeigt, daß die Eigenschaften der erhaltenen Membranen und/oder die Kosten des Verfahrens bei Einhaltung dieser Bereiche günstiger sind als beim Arbeiten außerhalb davon. Der Bereich von 200 bis 250 °C für die erste Hitzebehandlung ist deshalb vorteilhaft, weil bei Temperaturen unter 200 °C der Zeitbedarf deutlich ansteigen kann und bei Temperaturen über 250 °C, je nach eingesetztem Polymer, die mechanischen Eigenschaften der Membran verschlechtert werden können.

Eine Carbonisierungstemperatur von weniger als 800 °C kann ebenfalls den Zeitbedarf erheblich erhöhen, eine Temperatur von mehr als 1600 °C macht die Verwendung spezieller Vorrichtungen und die Verwendung von Edelgas erforderlich, während bis zu 1600 °C in $N_2$-Atmosphäre gearbeitet werden kann. Andererseits können bei höheren Carbonisierungstemperaturen, z.B. über 2000 °C, wegen zunehmender Graphitisierung andere Eigenschaften wie elektrische Leitfähigkeit der Membranen verbessert werden, so daß es u.a. von der vorgesehenen Verwendung abhängen kann, welche Carbonisierungstemperatur gewählt wird.

Die erste Hitzebehandlung und die Carbonisierung können bei einer konstanten Temperatur durchgeführt werden. Möglich ist aber auch, einen oder beide dieser Schritte bei variabler, z.B. im zeitlichen Verlauf des Verfahrens bzw. über die Länge der Vorrichtung steigender, Temperatur durchzuführen. In diesem Fall liegt die Maximaltemperatur innerhalb der genannten Bereiche.

Der Carbonisierungsschritt wird in einem inerten gasförmigen Medium durchgeführt. Das bedeutet, daß keine oxidative oder andere chemische Schädigung der Membran durch das Medium erfolgen darf.

Zweckmäßigerweise verwendet man hierfür als Medium aus Kostengründen Stickstoff. Die Verwendung von Stickstoff ist jedoch, wie aus der Fachliteratur bekannt, bei sehr hohen Temperaturen wegen Bildung von Nitriden ausgeschlossen. Für den Fall der Anwendung sehr hoher Temperaturen z.B. zwischen 2000 °C und 3000 °C sind als Medium für die Carbonisierung Edelgase, z.B. Argon, geeignet.

Unter Carbonisierung wird im Zusammenhang mit der Herstellung der Membranen nach dem erfindungsgemäßen Verfahren eine thermische Umwandlung in Kohlenstoff-Membranen verstanden, die bei einer Temperatur von mindestens 600 °C abläuft, die aber auch bei einer Temperatur von beispielsweise 3000 °C durchgeführt werden kann. Werden Temperaturen von mehr als etwa 2200 °C angewandt, findet eine zunehmende Bildung von Graphitstrukturen unter weiterer Zunahme des Kohlenstoffgehalts der Membranen statt. Der im Zusammenhang mit der vorliegenden Erfindung gebrauchte Begriff Carbonisierung umfaßt also auch Umwandlung der Membranen unter Anwendung von Temperaturbereichen, die für die Graphitisierung von Kohlefäden in der Fachliteratur genannt werden.

Die oben erwähnte erste Hitzebehandlung wird vorzugsweise in Luft oder Sauerstoff durchgeführt, wobei das Membranmaterial voroxidiert wird.

Die Zeitdauer der ersten Hitzebehandlung und der Carbonisierung kann in weiten Bereichen variiert werden. Es muß nur gewährleistet sein, daß durch die erste Hitzebehandlung die Membran ausreichend formstabil wird, was dadurch erreicht wird, daß man die erste Hitzebehandlung über eine Zeitdauer durchführt, die ausreicht, um die Membran unschmelzbar zu machen. Hierzu reichen im Normalfall, in Abhängigkeit von Polymer und der gewählten Temperatur, Behandlungszeiten von etwa 1 bis 20 Minuten aus. Ferner muß die Carbonisierung über eine Zeitspanne durchgeführt werden, die ausreicht, um eine Membran zu bilden, die zu mehr als 75 Gewichtsprozent aus Kohlenstoff besteht. Die erforderliche Zeitdauer richtet sich nach Polymer und der verwendeten Temperatur und beträgt im allgemeinen 5 bis 60 Minuten.

In einer bevorzugten Ausführungsform der Erfindung werden mit dem erfindungsgemäßen Verfahren Membranen hergestellt, die mehr als 85 Gewichtsprozent Kohlenstoff enthalten. Dies läßt sich z.B. durch Wahl entsprechender Temperatur und Zeitdauer des Carbonisierungsschrittes erreichen. Membranen mit mehr als 85 Gewichtsprozent Kohlenstoff weisen eine noch höhere chemische Beständigkeit auf als andere Kohlenstoffmembranen. Sie sind außerdem wegen des höheren Graphitanteils, der zu einer erhöhten elektrischen Leitfähigkeit führt, für Anwendungszwecke geeignet, in denen gute elektrische Leitfähigkeit vorteilhaft ist.

Die erste Hitzebehandlung und die Carbonisierung können in Vorrichtungen durchgeführt werden, die aus der Fachliteratur als zur Herstellung von Kohlenstoffäden geeignet bekannt sind, z.B. in elektrisch beheizten Öfen. Sie können darüber hinaus kontinuierlich oder diskontinuierlich, d.h. chargenweise, durchgeführt werden. Die kontinuierliche Durchführung des erfindungsgemäßen Verfahrens ist im Normalfall kostengünstiger und kann den unten beschriebenen Schritt der Vorbehandlung mit einer wäßrigen Lösung als Bestandteil eines kontinuierlichen Verfahrens enthalten.

Die erste Hitzebehandlung bzw. Voroxidation und die Carbonisierung können unter Bedingungen und in Vorrichtungen durchgeführt werden, wie sie in der DE-B-26 14 391 zur Herstellung von Kohlenstoffäden genannt sind. Weitere Angaben über geeignete Bedingungen finden sich in dem oben bereits angegebenen Buch "Carbon Fibers", 1. Auflage, von J.-B. Donnet und R.C. Bansal, 1984, Marcel Dekker, Inc., New York.

Die erste Hitzebehandlung und die Carbonisierung können sowohl kontinuierlich als auch chargenweise durchgeführt werden, z.B., indem man eine Kapillarmembran oder eine Bahn einer Flachmembran aus Polyacrylnitril kontinuierlich durch hintereinandergeschaltete Öfen führt, in welchen die Hitzebehandlungen stattfinden. Da während der Hitzebehandlungen Gase frei werden, ist es zweckmäßig, diese Gase während des Verfahrens laufend zu entfernen. Man führt daher das Verfahren zweckmäßigerweise so durch, daß man Öfenmit je einer Ein- und Auslaßöffnung für Gase verwendet, wobei frisches gasförmiges Medium, das vorerhitzt wurde, laufend zugeführt und an der Auslaßstelle Gase durch eine geeignete Absaugvorrichtung laufend entfernt werden.

Über die gezielte Auswahl von Ausgangs-Membranen bestimmter Eigenschaften lassen sich die Eigenschaften der daraus zu erhaltenen Kohlenstoff-Membranen in gewünschter Weise vorherbestimmen. Da während der Umwandlung der Ausgangs-Membranen aus Polyacrylnitril oder Copolymerisat in Kohlenstoff-Membranen eine Verringerung der Membrandicke, hervorgerufen durch Gewichtsverlust, auftritt und vielfach auch die Porengröße etwas abnimmt, verwendet man zweckmäßigerweise Ausgangs-Membranen, welche eine größere Dicke und einen größeren maximalen Porendurchmesser aufweisen als für die daraus herzustellenden Kohlenstoff-Membranen gewünscht wird. Das Ausmaß, in dem Dicke und Porengrößen reduziert werden, hängt von den Verfahrensbedingungen wie Temperatur und Zeit der Hitzebehandlung bzw. Carbonisierung ab und ist im Einzelfall leicht durch wenige Versuche zu ermitteln.

Mit dem erfindungsgemäßen Verfahren werden bevorzugt Membranen einer Dicke im Bereich von 5 bis 200 $\mu$m hergestellt. Es sind zwar auch Membranen mit anderen Dicken nach dem erfindungsgemäßen Verfahren herstellbar. Ist jedoch die Dicke kleiner als 5 $\mu$m, können Probleme bezüglich mechanischer Stabilität, vor allem bei Druckbelastung, auftreten. Bei zunehmenden Dicken werden andererseits die Geschwindigkeiten des Stofftransports geringer, so daß Dicken von mehr als 200 $\mu$m für bestimmte Anwendungsbereiche unwirtschaftlich werden können.

Die mit dem erfindungsgemäßen Verfahren herstellbaren Membranen können ein isotropes oder ein anisotropes Porensystem aufweisen. Unter einem anisotropen Porensystem ist zu verstehen, daß Porengröße und/oder -struktur einen Gradienten vom Innern der Membran zu ihren Oberflächen hin aufweisen. Speziell im Fall von Membranen mit Poren kleinen Durchmessers, d.h. maximalen Porendurchmessern im Bereich von 0,01 bis 0,05 $\mu$m ist häufig ein anisotropes Porensystem erwünscht, bei dem die Porendurchmesser an der Membranoberfläche kleiner sind als im Innern der Membran. Diese für die Ultrafiltration besonders geeigneten asymmetrischen Membranen weisen also eine dünne "Oberflächenhaut" mit geringer Porengröße auf, die für die Selektivität verantwortlich ist. Würde man dagegen die Poren auch im Innern der Membran auf die durch die Selektivitätsanforderungen vorgegebene Größe einstellen, ginge dies auf Kosten der Durchflußraten. Die oben erwähnte Bestimmungsmethode für die maximalen Porendurchmesser gibt im Fall dieser anisotropen Membranen den maximalen Porendurchmesser der Oberflächenschicht an, also den maximalen Durchmesser, den die durchgehenden Poren an ihrer jeweils engsten Stelle aufweisen.

In einer bevorzugten Ausführungsform des erfindungsgemäßen Verfahrens verwendet man als Ausgangsmaterial eine unverstreckte oder nur teilweise verstreckte Membran. Unter nur teilweiser Verstreckung ist hierbei zu verstehen, daß die Membranen,von denen ausgegangen wird, nach ihrer Herstellung, die im allgemeinen durch einen Spinnprozeß erfolgt, auf nicht mehr als etwa das 3fache ihrer ursprünglichen Länge verstreckt werden. Insofern unterscheidet sich diese bevorzugte Ausführungsform des erfindungsgemäßen Verfahrens von der Herstellung von Verstärkungsfasern aus Kohlenstoff, bei der aus Gründen der geforderten Festigkeits- und Moduleigenschaften im Normalfall hochverstrecktes Ausgangsmaterial verwendet wird. Die bevorzugte Verwendung unverstreckter oder nur teilverstreckter Membranen zur Durchführung des erfindungsgemäßen Verfahrens bietet den Vorteil, daß das Porensystem dieser Membranen, wie es nach dem Spinnprozeß vorliegt, in einem größeren Ausmaß in den Kohlenstoffmembranen erhalten bleibt als im Fall einer zwischengeschalteten hohen Verstreckung. Außerdem ist die Formstabilität hierdurch besser gewährleistet. Es kann jedoch während der Umwandlung in die Kohlenstoffmembranen eine Abnahme des maximalen Porendurchmessers auftreten, die beispielsweise 50 % betragen kann. Das Ausmaß, in dem Porendurchmesser abnehmen, hängt von Verfahrensparametern wie Zeit und Temperatur der Carbonisierung ab und kann daher durch entsprechende Maßnahmen gesteuert werden. Hierdurch und durch die Auwahl von Membranen mit bestimmten Eigenschaften, wie z.B. bestimmten maximalen Porendurchmessern, als Ausgangsmaterial lassen sich somit Porengrößen und -strukturen der mit dem erfindungsgemäßen Verfahren herstellbaren Membranen gezielt und reproduzierbar einstellen.

Eine weitere Maßnahme besteht in einer bevorzugten Ausführungsform des erfindungsgemäßen Verfahrens darin, daß man die erste Hitzebehandlung und/oder die Carbonisierung unter vollständiger oder weitgehender Schrumpfbehinderung durchführt. Unter weitgehender Schrumpfbehinderung ist dabei zu verstehen, daß durch geeignete Maßnahmen verhindert wird, daß die Membran um mehr als 5 % ihrer Länge, bzw. im Fall von Flachmembranen ihrer Länge und Breite, schrumpft. Die Behinderung des Schrumpfes kann im Chargenbetrieb z.B. durch Einspannen der Flachmembran in einen Rahmen oder Festklemmen der Enden einer Kapillarmembran oder Schlauchmembran erfolgen. Gegebenenfalls wird hierbei eine leichte Spannung angelegt. Bei kontinuierlich durchgeführtem Verfahren wird die Schrumpfbehinderung zweckmäßigerweise so durchgeführt, daß eine Kapillar-, Schlauch- oder Flachmembran unter Spannung durch Öfen geführt wird. Die Membran kann auch vollständig am Schrumpfen gehindert, d.h. auf konstanter Länge gehalten werden. Gegebenenfalls kann auch durch Anlegen einer entsprechend höheren Spannung die Länge der Membran während der Hitzebehandlung vergrössert werden, wobei naturgemäß dafür Sorge zu tragen ist, daß sich die mechanischen Eigenschaften nicht in unerwünschter Weise verschlechtern.

Durch die Maßnahme der Schrumpfbehinderung läßt sich in einer Reihe von Fällen eine erhöhte Formstabilität der Membran erzielen.

Entscheidend für das erfindungsgemäße Verfahren ist es, die Membran aus einem Acrylnitrilpolymer vor der ersten Hitzebehandlung einer Vorbehandlung mit einer wäßrigen Lösung von Hydrazin zu unterwerfen. Es hat sich gezeigt, daß hierdurch die Formstabilität der Membran während der nachfolgenden Verfahrenschritte verbessert wird und vor allem, daß während dieser Schritte Teerbildung und Verstopfen der Poren verhindert werden können.

Die wäßrige Losung enthält hierbei mindestens bevorzugt 50 bis 65 Gewichtsprozent Hydrazin. Die Vorbehandlung wird bevorzugt während einer Zeit von 15 bis 60 Minuten durchgeführt, wobei die Lösung vorzugsweise auf einer Temperatur im Bereich von 60 bis 90 °C gehalten wird. Sehr gute Ergebnisse wurden bei Acrylnitrilpolymeren mit einer Vorbehandlung mit 80%igem Hydrazinhydrat, einer Vorbehandlungsdauer von 30 Minuten bei einer Lösungstemperatur von 90 °C erhalten. Wird die angegebene Mindestkonzentration von 40 Gew.-% Hydrazin unterschritten, so läßt sich das Problem der Teerbildung bei der Membranherstellung nicht befriedigend lösen. Während der Vorbehandlung ist die Membran vollständig in die entsprechende Lösung eingetaucht. Die Vorbehandlung mittels der wäßrigen Lösung kann chargenweise, aber auch als ein Schritt eines kontinuierlichen Verfahrens durchgeführt werden, z.B. indem man die Membran hintereinander durch ein Vorbehandlungsbad, ein Waschbad und eine Trockenvorrichtung führt, bevor sie der ersten Hitzebehandlung zugeführt wird, die sich kontinuierlich anschließt.

Nach der Vorbehandlung mit Lösung wird die Membran, bevor sie der ersten Hitzebehandlung zugeführt wird, gewaschen und getrocknet. Das Waschen erfolgt zweckmäßigerweise mit Wasser, das Trocknen z.B. in einem Umluftofen.

Es hat sich weiterhin in bestimmten Fällen als vorteilhaft erwiesen, wenn die Poren der Membran vor der genannten Vorbehandlung mit wäßriger Lösung durch Anlegen eines Unterdrucks evakuiert und anschließend mit Stickstoffgas von Normaldruck gefüllt wurden. Dadurch kann man nach der Carbonisierung Membranen mit höherem Kohlenstoffgehalt erhalten, als wenn die Poren bei der Vorbehandlung mit wäßrigem Hydrazinhydrat noch mit Luft gefüllt waren.

Mit dem erfindungsgemäßen Verfahren lassen sich Membranen hoher Festigkeit erhalten, die z.B. durch den Berstdruck bestimmt wird. Zur Bestimmung des Berstdrucks wird durch das Innere der Kapillar- oder Schlauchmembran Wasser geleitet. Daraufhin wird bei Raumtemperatur im Inneren der Membran der Druck des Wassers erhöht und derjenige Wert gemessen, bei dem ein plötzlicher Druckabfall auftritt. Dieser ist auf Bersten der Membran zurückzuführen.

Im Fall von Flachmembranen erfolgt die Messung in analoger Weise an in einem Rahmen eingespannten Membranen. Die mit dem erfindungsgemäßen Verfahren hergestellten Membranen weisen im Regelfall einen Berstdruck von mehr als 12 bar auf. Der Berstdruck ist naturgemäß von der Dicke der Membran abhängig.

Mit dem erfindungsgemäßen Verfahren lassen sich Membranen guter Formstabilität, Flexibilität und elektrischer Leitfähigkeit herstellen. Die Membranen sind in nichtoxidierenden Medien bei Temperaturen von mehr als 1000 °C chemisch stabil, also für Hochtemperaturprozesse einsetzbar.

Die mit dem erfindungsgemäßen Verfahren herstellbaren Membranen eignen sich auf Grund der chemischen und thermischen Beständigkeit hervorragend für die Mikrofiltration oder Ultrafiltration chemisch aggressiver und/oder heißer Medien wie z.B. starken Säuren oder Basen bei erhöhten Temperaturen. Daneben besitzen die Membranen auf Grund ihrer chemischen Natur eine gute Widerstandsfähigkeit gegenüber organischen Flüssigkeiten auch bei hohen Temperaturen, so daß sie zur Behandlung solcher Flüssigkeiten besser geeignet sind als z.B. Membranen aus Polyolefinen, Polyurethanen und Polyamiden.

Erfindungsgemäß hergestellte Membranen mit kleinen Porengrößen lassen sich vorteilhaft für die Abtrennung von Feststoffen aus Gasen einsetzen. Eine spezielle Verwendungsmöglichkeit besteht darin, die Membran als Träger für einen Katalysator zu verwenden, der zur Reinigung von Autoabgasen dient. Daneben können solche Membranen auch vorteilhaft zur Trennung, Wiedergewinnung bzw. Reinigung von Gasen eingesetzt werden, die in der chemischen Industrie oder im Kraftwerksbereich anfallen.

Eine weitere Verwendungsmöglichkeit liegt in der Reinigung von Abwässern aus Färbereien.

Ein weiterer Vorteil der erfindungsgemäß herstellbaren Membranen gegenüber Membranen aus nicht-carbonisierten organischen Polymeren besteht darin, daß sie sofort nach ihrer Herstellung ohne zusätzliche Maßnahme steril sind und jederzeit durch eine Hitzebehandlung erneut sterilisiert werden können.

Die erfindungsgemäß herstellbaren Membranen weisen gegenüber Membranen aus nicht-carbonisierten organischen Materialien den Vorteil einer hervorragenden Formstabilität auf, d.h. sie quellen und schrumpfen nicht oder nur zu einem unbedeutenden Ausmaß, selbst wenn sie bei hohen Temperaturen mit organischen Lösungsmitteln oder Dämpfen in Kontakt kommen.

Die Erfindung wird nunmehr durch ein Ausführungsbeispiel veranschaulicht.

Beispiel

Herstellung einer porösen Kapillarmembran aus Polyacrylnitril:

17,5 g Polyacrylnitril (Zahlenmittel des Molekulargewichts: 50000) und 7,5 g Polyäthylenglykol (Zahlenmittel des Molekulargewichts: 1500) als Porenbildner wurden in 75,0 g N,N-Dimethylacetamid (DMAc) gelöst. Die erhaltene Lösung wurde filtriert, sorgfältig entgast und anschließend durch eine Hohlfadendüse bei 25 °C versponnen. Zur Bildung des Innenlumens wurde eine wäßrige DMAc-Lösung mit 72 Gewichtsprozent DMAc verwendet. Die Temperatur dieser Lösung betrug 10 °C. Die Hohlfadendüse war 1 cm über einer als Fällbad dienenden wäßrigen DMAc-Lösung mit 70 Gewichtsprozent DMAc und einer Temperatur von 70 °C angebracht. Die Verweilzeit der Membran im Fällbad betrug ca. 10 sec. Nach Durchlaufen des Fällbads wurde die Kapillarmembran mit 10 m/min aufgewickelt. Anschließend wurde die Membran in einer Wasserdampfatmosphäre (1 bar Überdruck) bei einer Temperatur von 120 °C um 100 % verstreckt. Zur Verringerung des Schrumpfes wurde die Membran mit Wasser von 90 °C 5 Sekunden lang behandelt.

Nach Trocknung besaß die erhaltene Kapillarmembran folgende Daten:

| | |
|---|---|
| Maximaler Porendurchmesser ($d_{max}$): | 0,41 $\mu$m |
| Lumendurchmesser | 900 $\mu$m |
| Wandstärke | 140 $\mu$m |
| Gewichtsprozent C | 69,1 |
| Transmembranfluß (TMF) für Isopropanol bei 25 °C | 3,2 ml/cm$^2$·min·bar |

Vorbehandlung und erste Hitzebehandlung (Voroxidation):

Die Kapillarmembran wurde 20 Minuten bei 70 °C in einer wäßrigen Lösung vorbehandelt, die 80 Gewichtsprozent Hydrazinhydrat enthielt. Diese Vorbehandlung erfolgte unter Stickstoffatmosphäre und Anlegen einer leichten Spannung an die Membran, so daß sie praktisch nicht schrumpfte. Nach Waschen mit Wasser und Trocknen wurde die Membran 20 Minuten bei 240 °C an Luft hitzebehandelt. Auch hierbei wurde unter praktisch vollständiger Schrumpfbehinderung gearbeitet, was durch Einklemmen der Membranenden erfolgte.

Es wurde eine dunkelbraune, flexible Kapillarmembran mit folgenden Daten erhalten:

| | |
|---|---|
| $d_{50}$ | 0,16 µm |
| $d_{max}$ | 0,32 µm |
| Lumendurchmesser | 900 µm |
| Wandstärke | 150 µm |
| Gewichtsprozent C | 66,4 |
| TMF (Isopropanol 25 °C) | 2,8 ml/cm²·min·bar |

Carbonisierung:

Die entsprechend den obigen Angaben behandelte Membran wurde innerhalb 1 Stunde von Raumtemperatur linear auf 1200 °C in einem von außen beheizten Keramikrohr erhitzt und 10 min. bei 1200 °C gehalten. Als inertes Medium wurde Stickstoff verwendet, der den Ofen durchströmte und vor Eintritt in den Ofen vorgeheizt wurde. Die Carbonisierung erfolgte unter Konstanthalten der Membranlänge.

Es wurde eine metallisch glänzende, schwarze flexible Kapillarmembran mit folgenden Daten erhalten:

| | |
|---|---|
| Lumendurchmesser | 700 µm |
| Wandstärke | 120 µm |
| $d_{50}$ | 0,15 µm |
| $d_{max}$ | 0,30 µm |
| Gewichtsprozent C | 86,9 |
| elektrischer Widerstand | 100 Ω/cm (in Längsrichtung gemessen) |
| TMF (Isopropanol, 25 °C) | 2,4 ml/cm²·min·bar |

Die Größe $d_{50}$ ist folgendermaßen definiert:

50 % der Poren besitzen einen Durchmesser, der größer ist als $d_{50}$, und 50 % der Poren besitzen einen kleineren Durchmesser als $d_{50}$.

$d_{50}$ wird gemessen in Anlehnung an ASTM 316, in der beschrieben ist, wie Porengrößenverteilungen nach der Blaspunktmethode ermittelt werden können. Diese Methode wurde im vorliegenden Fall modifiziert, indem man nicht die

Flußwerte eines Gases in Abhängigkeit vom Druck bestimmte, sondern die einer Flüssigkeit.

Aus dem Vergleich der Werte von $d_{50}$ mit denen von $d_{max}$ geht die enge Porenverteilung der Membranen hervor.

In der nachfolgenden Tabelle sind Daten der gemäß Ausführungsbeispiel erhaltenen Membran den entsprechenden Daten einer Membran gemäß US-A-3 977 967 gegenübergestellt.

Tabelle

| | C-Membran US-A-3 977 967 | C-Membran erfindungsgemäß |
|---|---|---|
| max. Pore (µm) | 0,2 - 0,4 | 0,3 |
| $N_2$-Fluß ml/min.cm².bar | 20 | 600 |
| $H_2O$-Fluß ml/m².h.bar | 150 | 3800 |

Trotz vergleichbarer maximaler Porengrößen unterscheiden sich die Membranen erheblich in den Flußwerten.

10

**Patentansprüche**

1. Verfahren zur Herstellung von Poren aufweisenden Kohlenstoff-Membranen in Form von Kapillarmembranen, Schlauchmembranen oder Flachmembranen, die zu mehr als 75 Gewichtsprozent aus Kohlenstoff bestehen und eine Porosität von 10 bis 90% und einen maximalen Porendurchmesser im Bereich von 0,005 bis 3 $\mu$m aufweisen, durch Carbonisierung einer Poren aufweisenden Membran aus einem Acrylnitrilpolymeren, dadurch gekennzeichnet, daß man
   (a) die Membran in einer wäßrigen Hydrazinlösung, die mindestens 40 Gewichtsprozent Hydrazin enthält, vorbehandelt, wäscht und trocknet,
   (b) eine Voroxidation der Membran in einem Temperaturbereich von 180 bis 350°C und
   (c) in einem inerten gasförmigen Medium eine Carbonisierung der Membran in einem Temperaturbereich von 600 bis 3000°C durchführt.

2. Verfahren nach Anspruch 1, dadurch gekennzeichnet daß eine wäßrige Lösung verwendet wird, die 50 bis 65 Gew.-% Hydrazin enthält.

3. Verfahren nach Anspruch 1 oder 2, dadurch gekennzeichnet, daß die Vorbehandlung 15 bis 60 Minuten lang in einem Temperaturbereich von 60 bis 90 °C durchgeführt wird.

4. Verfahren nach einem oder mehreren der Ansprüche 1 bis 3, dadurch gekennzeichnet, daß vor der Vorbehandlung mit wäßriger Hydrazinlösung die Poren der Membran durch Anlegen eines Unterdrukkes evakuiert und anschließend mit Stickstoffgas von Normaldruck wieder gefüllt werden.

5. Verfahren nach einem oder mehreren der Ansprüche 1 bis 4, dadurch gekennzeichnet, daß eine unverstreckte oder nur teilweise verstreckte Membran eingesetzt wird.

6. Verfahren nach einem oder mehreren der Ansprüche 1 bis 5, dadurch gekennzeichnet, daß man die erste Hitzebehandlung und/oder die Carbonisierung unter weitgehender oder vollständiger Schrumpfbehinderung durchführt.

7. Verfahren nach einem oder mehreren der Ansprüche 1 bis 6, dadurch gekennzeichnet, daß man die Carbonisierung in Stickstoff- oder Edelgasatmosphäre durchführt.

8. Verfahren nach einem oder mehreren der Ansprüche 1 bis 7, dadurch gekennzeichnet, daß man die erste Hitzebehandlung in Luft- oder Sauerstoffatmosphäre durchführt.

9. Verfahren nach einem oder mehreren der Ansprüche 1 bis 8, dadurch gekennzeichnet, daß man die erste Hitzebehandlung im Temperaturbereich von 200 bis 250 °C durchführt.

10. Verfahren nach einem oder mehreren der Ansprüche 1 bis 9, dadurch gekennzeichnet, daß man die Carbonisierung im Temperaturbereich von 800 bis 1600 °C durchführt.

11. Verfahren nach einem oder mehreren der Ansprüche 1 bis 10, dadurch gekennzeichnet, daß man eine Membran mit einer Porosität von 50 bis 80 % und mit einem maximalen Porendurchmesser im Bereich von 0,01 bis 1,5 $\mu$m einsetzt.

12. Poren aufweisende Kohlenstoff-Membran, herstellbar nach einem Verfahren gemäß einem oder mehreren der Ansprüche 1 bis 11.

13. Verwendung einer gemäß einem oder mehreren der Ansprüche 1 bis 11 herstellbaren Membran zur Mikrofiltration oder Ultrafiltration chemisch aggressiver und/oder heißer Medien.

14. Verwendung einer gemäß einem oder mehreren der Ansprüche 1 bis 11 herstellbaren Membran zur Abtrennung von Feststoffen aus Gasen.

15. Verwendung einer gemäß einem oder mehreren der Ansprüche 1 bis 11 herstellbaren Membran zur Reinigung von Abgasen aus Verbrennungsmotoren oder aus anderen chemischen Prozessen.

**16.** Verwendung einer gemäß einem oder mehreren der Ansprüche 1 bis 11 herstellbaren Membran zur Reinigung von Abwässern aus Färbereien.

**Claims**

1. A process for manufacturing pore-containing carbon membranes in the form of capillary membranes, tubular membranes or flat membranes, which contain more than 75 % by weight of carbon and have a porosity of 10 to 90 % and a maximum pore diameter in the range from 0.005 to 3 $\mu$m, by carbonizing a pore-containing membrane of an acrylonitrile polymer, characterized by the fact that
   (a) the membrane is pretreated in an aqueous hydrazine solution containing at least 40 % by weight of hydrazine, washed and dried,
   (b) the membrane is preoxidized in a temperature range of 180 to 350 °C and
   (c) the membrane is carbonized in an inert gaseous medium in a temperature range of 600 to 3000 °C.

2. A process according to Claim 1, characterized by the use of an aqueous solution containing 50 to 65 % by weight of hydrazine.

3. A process according to Claim 1 or 2, characterized by the fact that the pretreatment is carried out for 15 to 60 minutes in a temperature range of 60 to 90 °C.

4. A process according to one or several of Claims 1 to 3, characterized by the fact that before the pretreatment with aqueous hydrazine solution the pores of the membrane are evacuated by applying a pressure below atmospheric and afterwards refilled with normal-pressure nitrogen gas.

5. A process according to one or several of Claims 1 to 4, characterized by the use of an unstretched or only partly stretched membrane.

6. A process according to one or several of Claims 1 to 5, characterized by the fact that the first heat treatment and/or the carbonization are carried out while preventing shrinkage to a large extent or completely.

7. A process according to one or several of Claims 1 to 6, characterized by the fact that the carbonization is carried out in a nitrogen or inert gas atmosphere.

8. A process according to one or several of Claims 1 to 7, characterized by the fact that the first heat treatment is carried out in an air or oxygen atmosphere.

9. A process according to one or several of Claims 1 to 8, characterized by the fact that the first heat treatment is carried out in the temperature range of 200 to 250 °C.

10. A process according to one or several of Claims 1 to 9, characterized by the fact that the carbonization is carried out in the temperature range of 800 to 1600 °C.

11. A process according to one or several of Claims 1 to 10, characterized by the use of a membrane with a porosity of 50 to 80 % and a maximum pore diameter in the range of 0.01 to 1.5 $\mu$m.

12. A pore-containing carbon membrane which can be manufactured by a process according to one or several of Claims 1 to 11.

13. The use of a membrane which can be manufactured according to one or several of Claims 1 to 11 for the microfiltration or ultrafiltration of chemically aggressive and/or hot media.

14. The use of a membrane which can be manufactured according to one or several of Claims 1 to 11 for separating solids from gases.

15. The use of a membrane which can be manufactured according to one or several of Claims 1 to 11 for cleaning exhaust gases from internal combustion engines or from other chemical processes.

**16.** The use of a membrane which can be manufactured according to one or several of Claims 1 to 11 for cleaning waste waters from dye works.

**Revendications**

**1.** Procédé de fabrication de membranes en carbone présentant des pores, sous forme de membranes capillaires, de membranes tubulaires ou de membranes planes, constituées de carbone pour plus de 75% en poids et présentant une porosité de 10 à 90% et un diamètre maximal des pores situé dans l'intervalle allant de 0,005 à 3 $\mu$m, par carbonisation d'une membrane en un polyacrylonitrile, présentant des pores,
   caractérisé en ce que
   (a) on traite au préalable la membrane dans une solution aqueuse d'hydrazine contenant au moins 40% en poids d'hydrazine, on la lave et on la sèche,
   (b) on effectue une pré-oxydation de la membrane dans un domaine de température allant de 180 à 350°C et
   (c) on réalise une carbonisation de la membrane, dans un domaine de température allant de 600 à 3000°C, dans un milieu gazeux inerte.

**2.** Procédé conforme à la revendication 1, caractérisé en ce que l'on utilise une solution aqueuse qui contient de 50 à 65% en poids d'hydrazine.

**3.** Procédé conforme à la revendication 1 ou 2, caractérisé en ce que le traitement préalable dure de 15 à 60 minutes et est réalisé dans l'intervalle de température allant de 60 à 90°C.

**4.** Procédé selon une ou plusieurs des revendications 1 à 3, caractérisé en ce que, avant le traitement préalable par la solution aqueuse d'hydrazine, on vide les pores de la membrane par application d'une pression négative, puis on les remplit à nouveau avec de l'azote gazeux sous pression normale.

**5.** Procédé selon une ou plusieurs des revendications 1 à 4, caractérisé en ce que l'on utilise une membrane non étirée, ou une membrane n'ayant subi qu'un étirage partiel.

**6.** Procédé selon une ou plusieurs des revendications 1 à 5, caractérisé en ce que l'on réalise le premier traitement thermique et/ou la carbonisation tout en empêchant, dans une grande mesure ou totalement, la membrane de se recroqueviller.

**7.** Procédé selon une ou plusieurs des revendications 1 à 6, caractérisé en ce que l'on effectue le carbonisation sous atmosphère d'azote ou de gaz rare.

**8.** Procédé selon une ou plusieurs des revendications 1 à 7, caractérisé en ce que l'on effectue le premier traitement thermique sous atmosphère d'air ou d'oxygène.

**9.** Procédé selon une ou plusieurs des revendications 1 à 8, caractérisé en ce que l'on effectue le premier traitement thermique dans l'intervalle de température allant de 200 à 250°C.

**10.** Procédé selon une ou plusieurs des revendications 1 à 9, caractérisé en ce que l'on réalise la carbonisation dans l'intervalle de température allant de 800 à 1600°C.

**11.** Procédé selon une ou plusieurs des revendications 1 à 10, caractérisé en ce que l'on utilise une membrane présentant une porosité de 50 à 80% et un diamètre maximal des pores situé dans l'intervalle allant de 0,01 à 1,5 $\mu$m.

**12.** Membrane en carbone présentant des pores, que l'on peut fabriquer selon un procédé conforme à l'une ou à plusieurs des revendications 1 à 11.

**13.** Utilisation d'une membrane que l'on peut fabriquer conformément à l'une ou à plusieurs des revendications 1 à 11, pour la microfiltration ou l'ultrafiltration de milieux très chauds et/ou chimiquement agressifs.

**14.** Utilisation d'une membrane que l'on peut fabriquer conformément à l'une ou à plusieurs des revendications 1 à 11, pour séparer des matières solides d'avec des gaz.

**15.** Utilisation d'une membrane que l'on peut fabriquer conformément à l'une ou à plusieurs des revendications 1 à 11, pour épurer des gaz résiduaires provenant de moteurs à combustion ou d'autres processus chimiques.

**16.** Utilisation d'une membrane que l'on peut fabriquer conformément à l'une ou à plusieurs des revendications 1 à 11, pour épurer des eaux résiduaires provenant d'installations de teinture.